# EUROPÄISCHE PATENTSCHRIFT

(11) **EP 2 605 238 B1**
(45) Veröffentlichungstag und Bekanntmachung des Hinweises auf die Patenterteilung: **03.05.2017**
(21) Anmeldenummer: 12008265.6
(22) Anmeldetag: 11.12.2012
(51) Int. Cl.: G10K 11/172, F01N 1/04, F02C 7/045

(54) **Akustischer Absorber**
Acoustic absorber
Absorbeur acoustique

(30) Priorität: 13.12.2011 DE 102011120979
(43) Veröffentlichungstag der Anmeldung: 19.06.2013
(73) Patentinhaber: Rolls-Royce Deutschland Ltd & Co KG, 15827 Blankenfelde-Mahlow (DE)
(72) Erfinder: Richter, Christoph, 12157 Berlin (DE)
(74) Vertreter: Hoefer & Partner Patentanwälte mbB

(56) Entgegenhaltungen:
- FR-A1- 2 214 932
- GB-A- 1 470 036
- US-A- 3 734 234
- US-A- 5 670 758

## Beschreibung

Die Erfindung betrifft einen im Wesentlichen plattenförmigen oder zylindrischen akustischen Absorber, welcher zur Dämpfung unterschiedlicher Schallfrequenzen insbesondere bei einem Fluggasturbinentriebwerk anwendbar ist.

Aus dem Stand der Technik ist es bekannt, eine Geräuschdämpfung entweder über einen Helmholtz-Resonator vorzunehmen oder diesen als Dämpfer nach dem λ/4-Prinzip wirkend auszubilden.

Der Stand der Technik zeigt hierzu napfartige, mit einem Trichter versehene Dämpfungselemente, so wie diese beispielsweise in der US 5,760,349 beschrieben sind. Ein weiteres Beispiel für einen derartigen Absorber zeigt die US 5,670,758. Diese Druckschriften zeigen sogenannte SAA-Absorber, die zum Einen einen hohen Platzbedarf erfordern und zum Anderen aufwändig in der Herstellung sind (SAA bedeutet spezial acoustic absorber). Dabei ist insbesondere zu berücksichtigen, dass die gezeigten offenen Trichterelemente eine komplexe Struktur aufweisen und in ein im Wesentlichen zylindrisches, rückseitig geschlossenes Gehäuseelement eingesetzt werden müssen. Nach dem Stand der Technik übernehmen die SAA Absorber keinerlei strukturelle Aufgaben und müssen in eine entsprechende Stützstruktur integriert werden, wobei sich große Lücken und Freiräume zwischen den einzelnen Absorbern ergeben.

Weiterhin zeigt der Stand der Technik sogenannte SDOF- oder DDOF-Absorber (single degree of freedom bzw. double degree of freedom). Als Beispiel hierfür wird die DE 10 2004 053 383 A1 genannt. Diese Druckschrift zeigt eine Wabenstruktur, welche in der Art von Bienenwaben aus sechs-eckigen Elementen aufgebaut ist, welche durch eine perforierte Wandung abgedeckt sind. Diese Absorber sind zur Dämpfung gemäß dem λ/4-Prinzip ausgebildet.

FR2214932 offenbart einen akustischen Absorber mit einer Wabenstruktur zwischen zwei Wandungen. Jede Wabenzelle umfasst einen Resonator in Form eines Trichterelements.

Die nach dem λ/4-Prinzip wirkenden Absorber dämpfen im Wesentlichen höhere Frequenzen, während die SAA-Absorber aufgrund ihrer Struktur mit zwei getrennten Kammern (zwei Freiheitsgraden) sowohl zur Dämpfung tieferer, als auch höherer Frequenzen geeignet sind.

Der Erfindung liegt die Aufgabe zugrunde, einen akustischen Absorber zu schaffen, welcher bei einfachem Aufbau und einfacher, kostengünstiger Herstellbarkeit ein gutes Dämpfungsverfahren über einen großen Frequenzbereich ermöglicht und die Nachteile des Standes der Technik vermeidet.

Erfindungsgemäß wird die Aufgabe durch die Merkmalskombination des Anspruchs 1 gelöst, die Unteransprüche zeigen weitere vorteilhafte Ausgestaltungen der Erfindung.

Die Erfindung schafft einen akustischen Absorber, welcher die beiden aus dem Stand der Technik bekannten Grundprinzipien in einfacher Weise kombiniert. Dabei werden SAA-Absorber mit SDOF- oder DDOF-Absorbern kombiniert. Hierzu ist erfindungsgemäß vorgesehen, dass eine Wabenstruktur zwischen einer ersten und einer zweiten Wandung angeordnet ist, wobei die erste Wandung mit einer Vielzahl von Öffnungen versehen und somit perforiert ist. Die erste Wandung kann in günstiger Ausgestaltung der Erfindung als perforierte Platte / Perforatplatte, als Platte mit Mikroperforierungen oder auch als Gewebe ausgebildet sein. Die Schallwellen können somit in die einzelnen Kammern der Wabenstruktur eindringen und werden dort nach dem λ/4-Prinzip gedämpft.

Zusätzlich sind an geeigneten Stellen SAA-Absorber vorgesehen. Diese sind durch die erfindungsgemäße Konstruktion sehr einfach und kostengünstig realisierbar, da es erfindungsgemäß lediglich erforderlich ist, eine im Wesentlichen zylindrische Ausnehmung in die Wabenstruktur einzubringen, beispielsweise einzufräsen oder einzubohren. Die Wandungen der Wabenstruktur bilden somit ein Gehäuseelement, in welches ein Trichterelement gemäß dem Helmholtz-Prinzip eingesetzt werden kann.

Um bei dem erfindungsgemäßen Absorber eine ausreichende Tiefe zum Erreichen der oberen Absorptionsfrequenz des SAA zu realisieren, ist die zweite Wandung im Bereich des Trichterelements napfförmig ausgebildet. Das ist erforderlich, damit die obere Frequenz mit maximaler Absorption für den SAA genau an die Frequenz angepasst werden kann, bei der der umliegende SDOF sein Absorptionsmaximum erreicht. Eine derartige napfförmige Ausbildung ist einfach und kostengünstig herstellbar. Erfindungsgemäß kann auf die napfförmige Ausbildung verzichtet werden. Damit ergibt sich ein breitbandigeres Absorptionsverhalten mit verringerter maximaler Absorption.

Erfindungsgemäß ist es somit möglich, einen großen Flächenanteil des akustischen Absorbers mit der Wabenstruktur auszustatten und selektiv einzelne SAA-Absorber einzubauen. Somit kann die gesamte Fläche des akustischen Absorbers in vorteilhafter Weise zur akustischen Dämpfung genutzt werden. Es ergibt sich somit erfindungsgemäß eine Optimierung der Flächennutzung.

Erfindungsgemäß ist das Trichterelement als separates Bauteil gefertigt. Es weist in bevorzugter Ausgestaltung einen Flansch auf, welcher gegen die Innenseite der perforierten ersten Wandung anlegbar und an dieser befestigbar ist oder in einer Aussparung in der Wabenstruktur befestigt werden kann, bevor die perforierte Außenwandung aufgebracht wird. Durch geeignete Wahl der Breite des Flansches ist es möglich, mit diesem alle teilweise aufgetrennten Waben der Wabenstruktur abzudecken, so dass eine Optimierung des Dämpfungsverhaltens oder Absorptionsverhaltens erfolgt und die Funktionsweise der Wabenstruktur in optimaler Weise beibehalten wird.

Durch die napfartige Ausgestaltung der zweiten Wandung, welche mittels eines Tiefziehvorganges oder in ähnlicher Weise erfolgen kann, wird ein ausreichendes Kammervolumen der SAA-Absorber geschaffen, welches hinsichtlich der zu dämpfenden Frequenz optimierbar ist.

Erfindungsgemäß wird somit eine große wirksame Schalldämpferfläche zur Verfügung gestellt, da der erfindungsgemäße akustische Absorber geringere ungenutzten Flächenbereiche aufweist, als dies beim Stand der Technik als nachteilig bekannt ist.

Der erfindungsgemäße akustische Absorber ist insbesondere zur Dämpfung im Bereich der Brennkammer und der Turbine eines Gasturbinentriebwerks einsetzbar.

In günstiger Weiterbildung der Erfindung ist es möglich, die Funktionsweise des SAA-Absorbers dadurch zu steigern, dass die angrenzenden, für die Absorption hinsichtlich des benötigten Volumens nicht erforderlichen angeschnittenen oder aufgetrennten Waben gefüllt werden, beispielsweise mit einem Kunststoffmaterial. Alternativ hierzu ist es erfindungsgemäß auch vorteilhaft, in die im Wesentlichen zylindrische Ausnehmung oder Ausfräsung / Ausbohrung der Wabenstruktur ein rohrartiges Einsatzelement einzusetzen, welches das Dämpfungsvolumen des SAA-Absorbers optimiert.

In Erweiterung des Prinzips der Erfindung kann die Aussparung in der Wabenstruktur auch durch eine Wabenstruktur mit vergrößerten Zellen ersetzt werden. Die Trichterelemente können erfindungsgemäß in diesem Fall auch als zusammenhängende Platte mit Löchern als Trichteröffnung ausgeführt werden. Die napfförmige Ausbildung der Rückwand ist in diesem Fall nicht notwendig und entfällt.

Für die Anwendung in Flugtriebwerken ist auch die Möglichkeit, durch die Lochplatte eindringende Flüssigkeiten abzuführen, bei Schalldämpfern ein sehr wesentliches sicherheitsrelevantes Element. Diese geschieht gemäß dem Stand der Technik üblicherweise durch umlaufende Schlitze in den Wandungen der Waben, die es Flüssigkeiten ermöglicht, von Zelle zu Zelle abzulaufen. Im oberen Bereich, wo die perforierte Wandung nach unten gerichtet ist, kann die Flüssigkeit normalerweise durch die perforierte Wandung wieder ablaufen und es sind keine Drainage-Schlitze (drainage slots) erforderlich. Die Flüssigkeiten werden gemäß Stand der Technik an der tiefsten Stelle gesammelt und abgeführt.

Dieses Prinzip kann auch für den kombinierten Absorber gemäß der aktuellen Erfindung angewandt werden. Da durch die Wandung des Trichters ergeben sich auch im oberen Bereich Volumina, in denen sich Flüssigkeiten sammeln könnten. Daher wird die Wabenstruktur erfindungsgemäß jeweils an der nach unten gerichteten Seite mit Drainageschlitzen versehen. Dieses einfache Prinzip zur Drainage lässt sich auf alle oben genannten Varianten der Erfindung anwenden. Die Drainage der unteren napfförmigen Elemente erfolgt über kleine Bohrungen am Boden derselben.

Im Folgenden wird die Erfindung anhand von Ausführungsbeispielen in Verbindung mit der Zeichnung beschrieben. Dabei zeigt:
- Fig. 1: eine schematische vereinfachte Schnittansicht des erfindungsgemäßen akustischen Absorbers,
- Fig. 2: eine vereinfachte Draufsicht auf die in Fig. 1 gezeigte Anordnung,
- Fig. 3: ein weiteres Ausführungsbeispiel des erfindungsgemäßen Absorbers,
- Fig. 4: eine perspektivische, vereinfachte Teil-Ansicht eines weiteren Ausführungsbeispiels,
- Fig. 5: eine Ansicht eines weiteren Ausführungsbeispiels, und
- Fig. 6: eine vereinfachte Teil-Draufsicht sowie eine vereinfachte Teil-Seitenansicht des in Fig. 5 gezeigten Ausführungsbeispiels.

Der erfindungsgemäße akustische Absorber umfasst eine erste Wandung 2, welche mit einer Vielzahl von Öffnungen oder Ausnehmungen 1 versehen ist. Die erste Wandung 2 kann in Form einer perforierten oder mikroperforierten Platte ausgebildet sein. Die erste Wandung 2 kann auch als Gewebe, beispielsweise Drahtgewebe ausgebildet sein. Die Öffnungen 1 erlauben den Eintritt von Schallwellen in eine rückseitig an der ersten Wandung 2 angeordnete Wabenstruktur 4. Diese umfasst eine Vielzahl von Wandungen 10, welche beispielsweise aus einem metallischen Material gefertigt sind und eine honigbienenwabenförmige Gesamtanordnung bilden. Es versteht sich, dass im Rahmen der Erfindung auch andere Geometrien der Wabenstruktur 4 möglich sind.

Innenliegend zu der Wabenstruktur 4 ist eine nicht-perforierte zweite Wandung 3 angeordnet und mit der Wabenstruktur 4 verbunden. Es ergibt sich somit eine sandwichartige Gesamtkonstruktion.

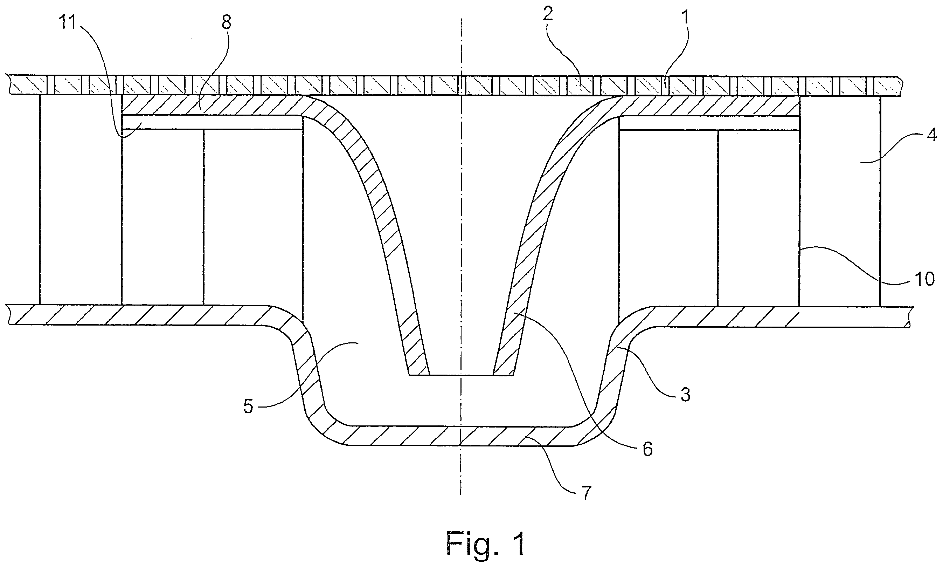

An ausgewählten Stellen ist in die Wabenstruktur eine im Wesentlichen zylindrische Ausnehmung 5 eingebracht, beispielsweise durch Einfräsen oder Bohren vor der Befestigung der ersten Wandung 2. In der Ausnehmung 5 ist ein Trichterelement 6 angeordnet, welches beidseitig offen ist und zur ersten Wandung 2 weisend einen ringförmigen Flansch 8 hat. Der Flansch 8 ist mit der ersten Wandung 2 verbunden, um das Trichterelement 6 zu fixieren. Das Trichterelement 6 weist eine Höhe auf, welche größer ist, als die Höhe der Wabenstruktur 4 bzw. der Abstand zwischen der ersten Wandung 2 und der zweiten Wandung 3. Um ein ausreichendes Dämpfungsvolumen bereitzustellen, weist die zweite Wandung 3 im Bereich des Trichterelements 6 eine napfartige Ausprägung 7 auf, so wie dies in Fig. 1 dargestellt ist.

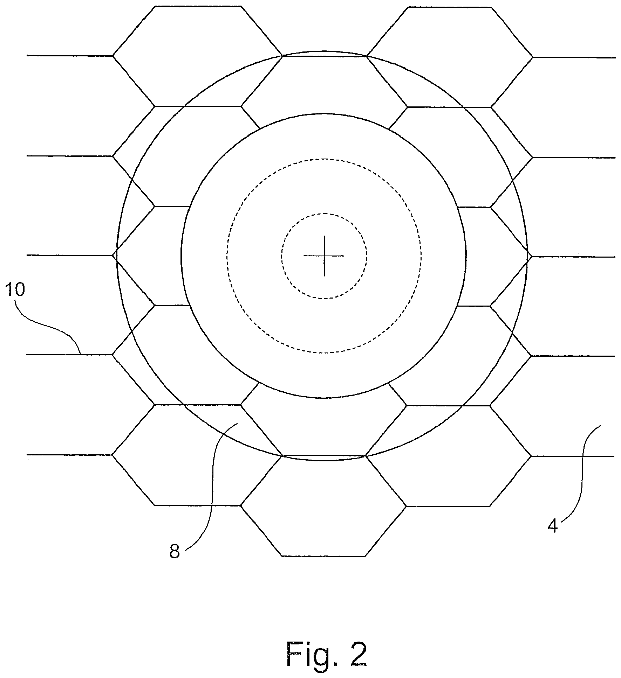

Die Fig. 2 zeigt eine Draufsicht auf die Anordnung der Fig. 1. Dabei ergibt sich in Zusammenschau mit der Fig. 1, dass die Wabenstruktur 4 mit einer ringförmigen Ausnehmung 11 versehen ist, um den Flansch 8 anzuordnen. Der Durchmesser des Flansches 8 bzw. die Breite des Flansches 8 ist so bemessen, dass alle angeschnittenen oder aufgetrennten Waben der Wabenstruktur 4 von dem Flansch 8 abgedeckt sind.

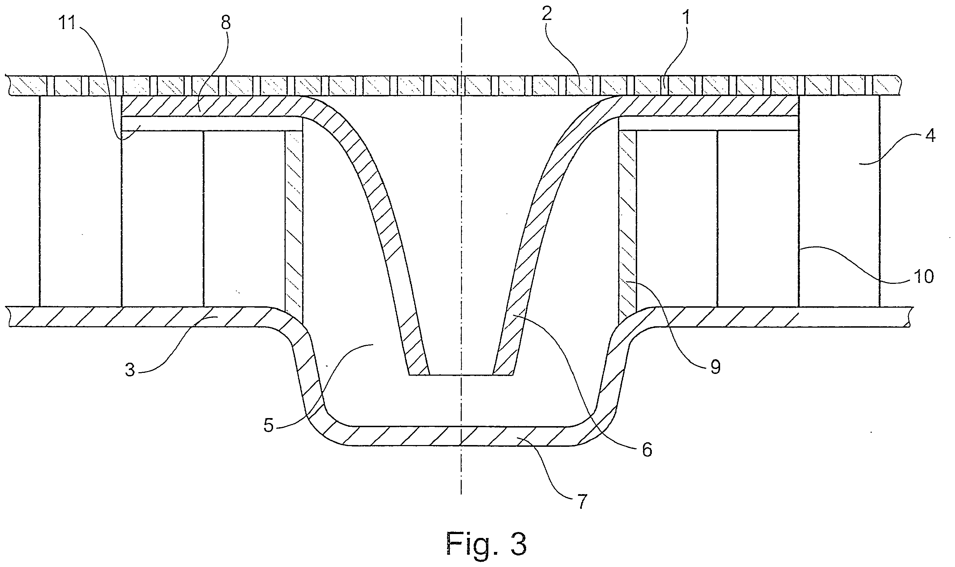

Zur Optimierung des Dämpfungsvolumens des durch das Trichterelement 6 gebildeten SAA kann es in günstiger Weiterbildung der Erfindung vorteilhaft sein, ein rohrförmiges Einsatzelement 9 in die Ausnehmung 5 einzusetzen, so wie dies in Fig. 3 gezeigt ist.

Erfindungsgemäß ergibt sich somit eine Optimierung der zur Schalldämpfung oder Schallabsorption nutzbaren Fläche des akustischen Absorbers.

Erfindungsgemäß ist es auch möglich, mehrere Wabenstrukturen 4 übereinander anzuordnen, welche unterschiedliche Kammervolumen aufweisen und somit zur Dämpfung unterschiedlicher Frequenzen optimiert sind.

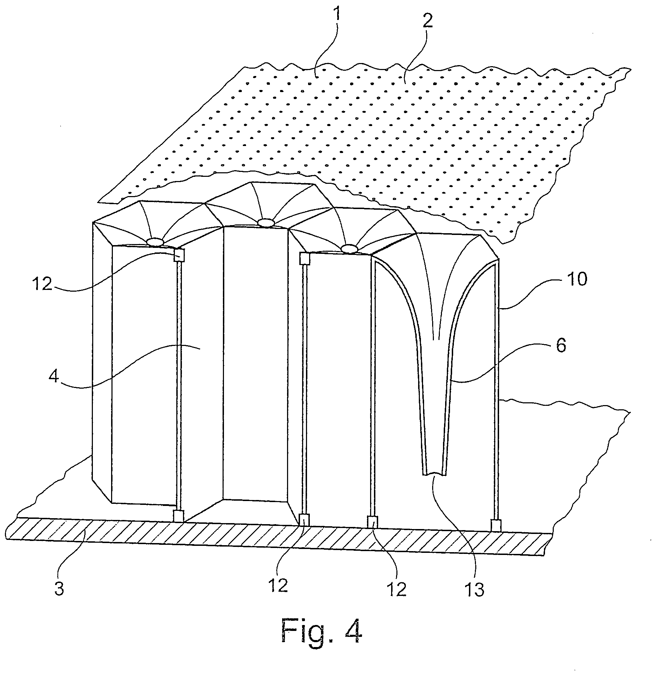

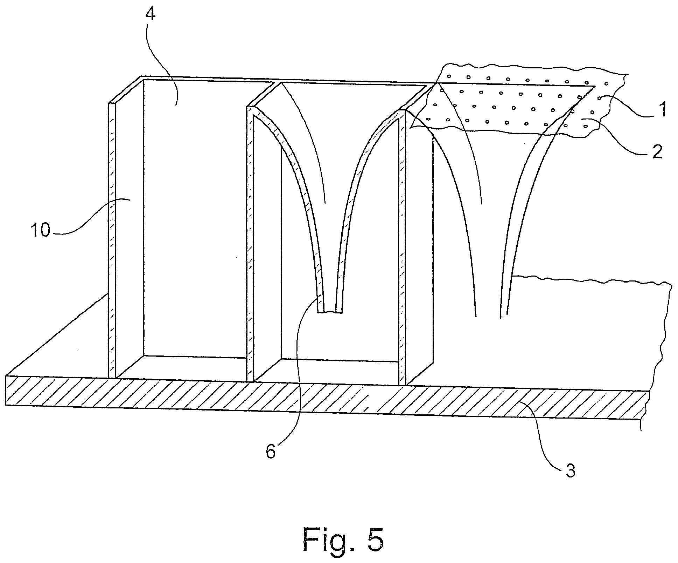

Die Fig. 4 und 5 zeigen weitere Ausführungsbeispiele des erfindungsgemäßen akustischen Absorbers. Bei den beiden Ausführungsbeispielen ist jeweils die Wabenstruktur 4 so dimensioniert, dass eine einzelne Wabe einen ausreichend großen Innenraum aufweist, um ein Trichterelement 6 aufzunehmen. Bei dem Ausführungsbeispiel der Fig. 4 sind die Waben sechseckig ausgebildet, während bei dem Ausführungsbeispiel der Fig. 5 eine Wabenstruktur vorgesehen ist, welche quadratische Waben aufweist.

Das Ausführungsbeispiel der Fig. 4 zeigt weiterhin Drainageausnehmungen 12 am oberen bzw. unteren Bereich der Wandungen 10 der Wabenelemente 4, welche dazu dienen, eingetretene Flüssigkeit abzuleiten.

Im Übrigen entspricht der Aufbau der in den Fig. 4 und 5 dargestellten Ausführungsbeispiele dem Aufbau der Ausführungsbeispiele der Fig. 1 bis 3, wobei gleiche Teile mit gleichen Bezugsziffern versehen wurden.

Besonders günstige Dimensionierungen für den erfindungsgemäßen akustischen Absorber können wie folgt sein:
- Durchmesser der Ausnehmung 5: 30 bis 40 mm, bevorzugt 40 mm;
- Außendurchmesser des Trichters des Trichterelements 6, am oberen, der ersten Wandung 2 zugewandten Endbereich: 30 bis 40 mm, bevorzugt 35 mm;
- Außendurchmesser des Trichters des Trichterelements 6, am unteren, der zweiten Wandung 3 zugewandten Endbereich: 3 bis 20 mm, bevorzugt 6 mm;
- Gesamthöhe des SAA, incl. der in den Fig. 1 und 2 gezeigten napfartigen Ausnehmung 5: 20 bis 100 mm, bevorzugt 85 mm;
- Höhe des verbleibenden Spalts zwischen dem unteren, der zweiten Wandung 3 zugewandten Ende des Trichterelements 6 und der zweiten Wandung 3: 1 bis 10 mm, bevorzugt 6 mm;

Die angrenzende, nicht mit Trichterelementen 6 versehene Wabenstruktur weist bevorzugterweise eine Gesamthöhe zwischen 40 und 50 mm auf. Die erste Wandung 2 mit den Öffnungen 1 ist in allen Bereichen dieselbe, sowohl im Bereich der SAA als auch im Bereich der SDOF- oder DDOF-Absorber.

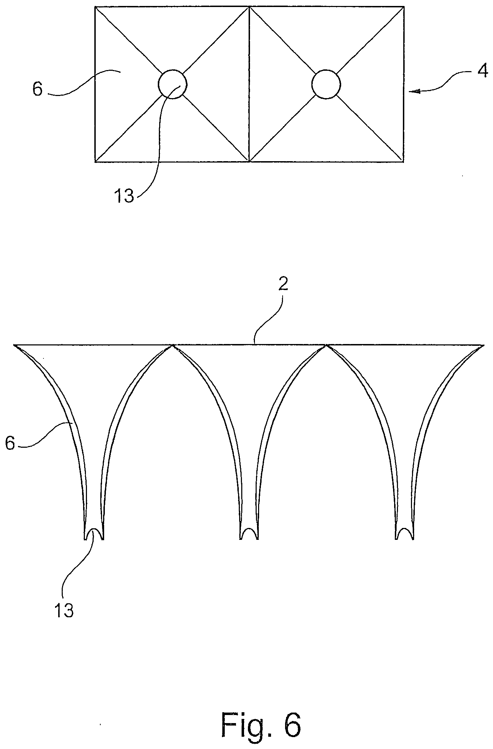

Die Fig. 6 zeigt eine Draufsicht bzw. eine vereinfachte Seitenansicht auf das in Fig. 5 gezeigte Ausführungsbeispiel. Dabei ist ersichtlich, dass die Trichterelemente 6 jeweils in quadratischen Waben der Wabenstruktur 4 angeordnet sind. Das Bezugszeichen 13 zeigt eine zentrische Ausnehmung der Trichterelemente 6.

### Bezugszeichenliste:

- 1: Öffnung
- 2: erste Wandung
- 3: zweite Wandung
- 4: Wabenstruktur
- 5: Ausnehmung
- 6: Trichterelement
- 7: Napf
- 8: Flansch
- 9: Einsatzelement
- 10: Wandung
- 11: Ringausnehmung
- 12: Drainageausnehmung
- 13: Zentrische Ausnehmung

## Patentansprüche

1. Akustischer Absorber mit einer mit einer Vielzahl von Öffnungen (1) versehenen Wandung (2) sowie mit einer im Wesentlichen nicht perforierten zweiten Wandung (3), wobei die erste (2) und die zweite (3) Wandung zueinander beabstandet sind und zumindest eine Wabenstruktur (4) zwischen den Wandungen (2, 3) angeordnet ist, wobei die Wabenstruktur (4) an zumindest einem Bereich mit einer im Wesentlichen zylindrischen Ausnehmung (5) versehen ist, wobei in der Ausnehmung (5) ein zur ersten (2) und zur zweiten (3) Wandung offenes Trichterelement (6) angeordnet ist, welches eine größere Höhe aufweist, als der Abstand der Wandungen (2, 3), wobei die zweite Wandung (3) im Bereich des Trichterelements (6) napfartig (7) ausgebildet ist.

2. Absorber nach Anspruch 1, **dadurch gekennzeichnet, dass** das Trichterelement (6) mit einem gegen die innere Seite der ersten Wandung (2) anliegenden Flansch (8) versehen ist.

3. Absorber nach Anspruch 2, **dadurch gekennzeichnet, dass** das Trichterelement (6) mittels des Flansches (8) an der ersten Wandung (2) befestigt ist.

4. Absorber nach Anspruch 2 oder 3, **dadurch gekennzeichnet, dass** der Flansch (8) nicht-perforiert ausgebildet ist.

5. Absorber nach einem der Ansprüche 1 bis 4, **dadurch gekennzeichnet, dass** die erste Wandung (2) als Perforatplatte, als Mikroperforatplatte oder als Gewebe ausgebildet ist.

6. Absorber nach einem der Ansprüche 1 bis 5, **dadurch gekennzeichnet, dass** an die im Wesentlichen zylindrische Ausnehmung (5) der Wabenstruktur (4) angrenzende, geöffnete Waben zur Ausbildung einer im Wesentlichen zylindrischen Ausnehmung (5) zumindest teilweise gefüllt sind.

7. Absorber nach einem der Ansprüche 1 bis 6, **dadurch gekennzeichnet, dass** in der im Wesentlichen zylindrischen Ausnehmung (5) der Wabenstruktur (4) zur Ausbildung einer zylindrischen Wandung ein rohrartiges Einsatzelement (9) angeordnet ist.

8. Absorber nach einem der Ansprüche 1 bis 7, **dadurch gekennzeichnet, dass** mehrere Trichterelemente (6) in gleichmäßiger geometrischer Anordnung angeordnet sind.

9. Absorber nach einem der Ansprüche 1 bis 7, **dadurch gekennzeichnet, dass** mehrere Trichterelement (6) in ungleichmäßiger geometrischer Anordnung gemäß der Schallwellenbeaufschlagung des Absorbers angeordnet sind.

10. Absorber nach einem der Ansprüche 1 bis 9, **dadurch gekennzeichnet, dass** die zylindrische Ausnehmung der Wabenstruktur durch eine Wabenstruktur mit stark vergrößertem Zelldurchmesser gebildet ist, und sich in jeder einzelnen Wabe ein Trichterelement (6) befindet.

11. Absorber nach einem der Ansprüche 1 bis 10, **dadurch gekennzeichnet, dass** die Wabenstruktur (4) jeweils auf der, in der Einbauposition des Absorbers unteren Seite, umlaufende Schlitze zur Entwässerung aufweist.

12. Absorber nach einem der Ansprüche 1 bis 10, **dadurch gekennzeichnet, dass** die Wabenstruktur (4) auf beiden Seiten, der Strömungszugewandten und der Rückseite, umlaufende Schlitze zur Entwässerung aufweisen.

13. Verwendung des akustischen Absorbers nach einem der Ansprüche 1 bis 12 bei einem Fluggasturbinentriebwerk.

## Claims

1. Acoustic absorber having a wall (2) provided with a plurality of apertures (1) as well as a substantially non-perforated second wall (3), with the first wall (2) and the second wall (3) being spacedly arranged to one another, and at least one honeycomb structure (4) being provided between the walls (2, 3), with the honeycomb structure (4) having a substantially cylindrical recess (5) in at least one area, with a funnel element (6) opening towards the first (2) and second (3) walls being provided in the recess (5), and having a height greater than the distance of the walls (2, 3), with the second wall (3) being designed pot-like (7) in the area of the funnel element (6).

2. Absorber in accordance with Claim 1, **characterized in that** the funnel element (6) is provided with a flange (8) which contacts the inside of the first wall (2).

3. Absorber in accordance with Claim 2, **characterized in that** the funnel element (6) is attached to the first wall (2) by means of the flange (8).

4. Absorber in accordance with Claim 2 or 3, **characterized in that** the flange (8) is designed non-perforated.

5. Absorber in accordance with one of the Claims 1 to 4, **characterized in that** the first wall (2) is designed in the form of a perforated plate, a micro-perforated plate or a mesh.

6. Absorber in accordance with one of the Claims 1 to 5, **characterized in that** open honeycombs adjacent to the substantially cylindrical recess (5) of the honeycomb structure (4) are at least partially filled for forming a substantially cylindrical recess (5).

7. Absorber in accordance with one of the Claims 1 to 6, **characterized in that** in the substantially cylindrical recess (5) of the honeycomb structure (4) a tube-like insert element (9) is arranged for forming a cylindrical wall.

8. Absorber in accordance with one of the Claims 1 to 7, **characterized in that** several funnel elements (6) are provided in even geometrical arrangement.

9. Absorber in accordance with one of the Claims 1 to 7, **characterized in that** several funnel elements (6) are provided in uneven geometrical arrangement in accordance with the sound waves applied to the absorber.

10. Absorber in accordance with one of the Claims 1 to 9, **characterized in that** the cylindrical recess of the honeycomb structure is formed by a honeycomb structure with hightly enlarged cell diameter and that a funnel element (6) is arranged in each individual honeycomb.

11. Absorber in accordance with one of the Claims 1 to 10, **characterized in that** the honeycomb structure (4) on the bottom side relative to the installation position of the absorber is provided with circumferential drainage slots.

12. Absorber in accordance with one of the Claims 1 to 10, **characterized in that** the honeycomb structure (4) is provided with circumferential drainage slots on both sides, the flow-facing side and the rear side.

13. Use of the acoustic absorber in accordance with one of the Claims 1 to 12 in an aircraft gas-turbine engine.

## Revendications

1. Absorbeur acoustique avec une paroi (2) pourvue d'une multitude de trous (1) et avec une seconde paroi (3) essentiellement non perforée, sachant que la première paroi (2) est espacée de la seconde (3) et qu'au moins une structure en nid d'abeilles (4) est disposée entre les parois (2, 3), sachant que la structure en nid d'abeilles (4) est pourvue d'un évidement (5) essentiellement cylindrique dans au moins une zone, sachant qu'est disposé dans l'évidement (5) un élément en entonnoir (6) ouvert vers la première paroi (2) et la seconde (3), lequel élément présente une hauteur supérieure à l'écart entre les parois (2, 3), sachant que la seconde paroi (3) présente la forme d'un godet (7) au niveau de l'élément en entonnoir (6).

2. Absorbeur selon la revendication n° 1, **caractérisé en ce que** l'élément en entonnoir (6) est pourvu d'une bride (8) jouxtant le côté intérieur de la première paroi (2).

3. Absorbeur selon la revendication n° 2, **caractérisé en ce que** l'élément en entonnoir (6) est fixé à la première paroi (2) au moyen de la bride (8).

4. Absorbeur selon la revendication n° 2 ou n° 3, **caractérisé en ce que** la bride (8) n'est pas perforée.

5. Absorbeur selon une des revendications n° 1 à n° 4, **caractérisé en ce que** la première paroi (2) est conçue sous la forme d'une plaque perforée, d'une plaque micro-perforée ou d'un treillis.

6. Absorbeur selon une des revendications n° 1 à n° 5, **caractérisé en ce que** les nids d'abeilles ouverts, avoisinant l'évidement (5) essentiellement cylindrique de la structure en nid d'abeilles (4) sont remplis au moins partiellement pour former un évidement essentiellement cylindrique (5).

7. Absorbeur selon une des revendications n° 1 à n° 6, **caractérisé en ce qu'**un insert (9) en forme de tube est disposé dans l'évidement (5) essentiellement cylindrique de la structure en nid d'abeilles (4) pour former une paroi cylindrique.

8. Absorbeur selon une des revendications n° 1 à n° 7, **caractérisé en ce que** plusieurs éléments en entonnoir (6) sont disposés dans une configuration géométrique régulière.

9. Absorbeur selon une des revendications n° 1 à n° 7, **caractérisé en ce que** plusieurs éléments en entonnoir (6) sont disposés dans une configuration géométrique irrégulière selon l'exposition de l'absorbeur aux ondes sonores.

10. Absorbeur selon une des revendications n° 1 à n° 9, **caractérisé en ce que** l'évidement cylindrique de la structure en nid d'abeilles est formé par une structure en nid d'abeilles avec un diamètre d'alvéole bien élargi et qu'un élément en entonnoir (6) se trouve dans chaque nid d'abeilles.

11. Absorbeur selon une des revendications n° 1 à n° 10, **caractérisé en ce que** la structure en nid d'abeilles (4) présente, sur le côté inférieur, dans la position de montage de l'absorbeur, des fentes circonférentielles servant à drainer l'eau.

12. Absorbeur selon une des revendications n° 1 à n° 10, **caractérisé en ce que** la structure en nid d'abeilles (4) présente des deux côtés, c'est-à-dire sur le côté exposé au flux et sur le côté opposé, des fentes circonférentielles servant à drainer l'eau.

13. Utilisation de l'absorbeur acoustique selon une des revendications n° 1 à n° 12 dans un moteur de turbine à gaz aéronautique.
